# EUROPÄISCHE PATENTSCHRIFT

(11) **EP 3 751 308 B1**
(45) Veröffentlichungstag und Bekanntmachung des Hinweises auf die Patenterteilung: **06.09.2023**
(21) Anmeldenummer: 20179010.2
(22) Anmeldetag: 09.06.2020
(51) Int. Cl.: G01S 11/12

(54) **VERFAHREN ZUR ERMITTLUNG DES ABSTANDS ZWEIER OBJEKTE, INSBESONDERE ZWEIER SATELLITEN**
METHOD FOR DETERMINING THE DISTANCE BETWEEN TWO OBJECTS, IN PARTICULAR TWO SATELLITES
PROCÉDÉ DE DÉTERMINATION DE LA DISTANCE ENTRE DEUX OBJETS, EN PARTICULIER DEUX SATELLITES

(30) Priorität: 12.06.2019 DE 102019115977
(43) Veröffentlichungstag der Anmeldung: 16.12.2020
(73) Patentinhaber: Deutsches Zentrum für Luft- und Raumfahrt e.V., 51147 Köln (DE)
(72) Erfinder: Surof, Janis, 80339 München (DE); Richerzhagen, Mathias, 81249 München (DE)
(74) Vertreter: dompatent von Kreisler Selting Werner - Partnerschaft von Patent- und Rechtsanwälten mbB

(56) Entgegenhaltungen:
- POLIAK JURAJ ET AL: "Laboratory Demonstrator of Optical Inter-satellite Links for the Kepler System", GNSS 2018 - PROCEEDINGS OF THE 31ST INTERNATIONAL TECHNICAL MEETING OF THE SATELLITE DIVISION OF THE INSTITUTE OF NAVIGATION (ION GNSS+ 2018), THE INSTITUTE OF NAVIGATION, 8551 RIXLEW LANE SUITE 360 MANASSAS, VA 20109, USA, 28. September 2018 (2018-09-28), Seiten 861-867, XP056014980,
- JUAN JOSE ESTEBAN DELGADO ET AL: "Free-space laser ranging and data communication", POSITIONING, NAVIGATION AND COMMUNICATION, 2009. WPNC 2009. 6TH WORKSHOP ON, IEEE, PISCATAWAY, NJ, USA, 19. März 2009 (2009-03-19), Seiten 275-281, XP031452406, ISBN: 978-1-4244-3292-9

## Beschreibung

Die vorliegende Patentanmeldung nimmt die Priorität der nationalen deutschen Patentanmeldung 10 2019 115 977.6 eingereicht am 12. Juni 2019, in Anspruch.

Die Erfindung betrifft ein Verfahren zur Ermittlung des Abstands zweier Objekte unter Verwendung eines optischen Signals, das von dem einen Objekt an das andere Objekt gesendet wird. Bei den beiden Objekten handelt es sich insbesondere um zwei Satelliten, die sich auf einem gemeinsamen Orbit hintereinander bewegen oder aber die sich auf unterschiedlichen Orbits bewegen.

Für verschiedene Anwendungsfälle kann es erforderlich sein, den Abstand zweier Objekte zu vermessen. Ein Beispiel ist die Abstandsmessung zwischen zwei Satelliten einer Satelliten-Konstellation mit mehreren Satelliten auf einem gemeinsamen Orbit. Eine Satelliten-Konstellation, bei der es auf die Abstandsermittlung benachbarter Satelliten ankommen kann, ist beispielsweise in WO 2019/01191 A1 beschrieben. In Fachkreisen wird bei der Abstandsermittlung mittels eines optischen Signals auch von "optical ranging" gesprochen. Insbesondere für die Anwendung in der Geodäsie ist es mitunter erforderlich, den Abstand zweier Satelliten millimetergenau zu ermitteln. Satellitensignale sind optische Signale, die mit einem Code versehen sind. Bei Satellitensignalen handelt es sich dabei typischerweise um sogenannte PRN-Codes, also Sequenzen von Symbolen, wobei ein Symbol eine Zeitdauer von lediglich 50 ps haben kann.

Es besteht die Anforderung, den Abstand beispielsweise von Satelliten mit Genauigkeiten im Submillimeterbereich bestimmen zu können.

In [1] ist ein möglicher Laboraufbau zum Test eines optischen Inter-Satellite-Links für bi-direktionale Übertragung von Zeit, Daten und zur Ermittlung der Entfernung zwischen den beiden Satelliten beschrieben. Zunächst werden die verschiedenen möglichen Szenarien zwischen einem LEO (Low Earth Orbit) und einem MEO (Medium Earth Orbit) beschrieben und die entstehenden opto-mechanischen Anforderungen erläutert. Für die Kommunikation werden ein Eingangslaser und ein Referenzlaser mit einer optischen Phasenregelschleife synchronisiert. Eine Verzögerungsregelschleife (DLL) wird verwendet, um das Eingangssignal mit dem Referenzsignal zu korrelieren. Es werden die Ergebnisse eines vereinfachten Systemtests zur Entfernungsmessung beschrieben. Schließlich wird das opto-mechanische Design näher erläutert und Hardwareentwicklungen kurz aufgezeigt.

Aufgabe der Erfindung ist es, ein Verfahren zur Ermittlung des Abstands zweier Objekte anzugeben, mit dem sich unter Verwendung vergleichsweise kostengünstiger Soft- und Hardware der Abstand der beiden Objekte höchst ermitteln lässt.

Zur Lösung dieser Aufgabe wird ein Verfahren gemäß dem Anspruch 1, der die Erfindung definiert, vorgeschlagen zur Ermittlung des Abstands zweier Objekte, insbesondere zweier Satelliten, unter Verwendung eines optischen Signals, das von dem einen Objekt an das andere Objekt gesendet wird, wobei bei dem Verfahren
- ein erstes Objekt von einem zweiten Objekt ein mittels eines Codes moduliertes optisches Signal mit einer bekannten Trägerfrequenz als Empfangssignal empfängt, wobei der Modulationscode eine Sequenz von Symbolen aufweist, die jeweils gleich lange Intervalle einnehmen, und
- in dem ersten Objekt
   - ein optisches Referenzsignal erzeugt wird, das als ein optisches Trägersignal mit der gleichen Frequenz wie diejenige des Empfangssignals und mit einer aufmodulierten, der Symbolsequenz des Empfangssignals gleichenden Symbolsequenz ausgebildet ist,
   - die Korrelation des Empfangssignals mit dem Referenzsignal ermittelt wird,
   - ein den Grad der Korrelation beschreibender Korrelationswert als ein elektrisches Signal erzeugt wird, das eine niedrigere Frequenz als das Empfangssignal aufweist,
   - die Symbolsequenz für das Referenzsignal mittels eines optischen Modulators zeitlich verschoben auf das Trägersignal moduliert wird, wobei die zeitliche Verschiebung anhand der Größe des Korrelationswerts bestimmt wird, so dass das Referenzsignal mit dem Empfangssignal in Phase gelangt,
   - eine Verschiebung der Symbolsequenz des Referenzsignals um eine Zeitdauer, die gleich dem Intervall eines Symbols oder gleich einem ganzzahligen Vielfachen des Intervalls ist, durch entsprechende zeitverzögerte Modulation des Trägersignals mittels eines die Symbolsequenz des Referenzsignals aufweisenden, elektrischen Digitalsignals erfolgt,
   - eine Verschiebung der Symbolsequenz des Referenzsignals um eine Zeitdauer, die kleiner ist als das Intervall eines Symbols, durch Ansteuerung eines dem Modulator vorgeschalteten Zeitverzögerungsglieds erfolgt, welches das die Symbolsequenz des Referenzsignals aufweisende, elektrische Digitalsignal empfängt und dieses Digitalsignal um die durch ein elektrisches Zeitverzögerungssteuersignal für das Zeitverzögerungsglied bestimmte Verzögerungszeit zeitverzögert an den Modulator weitergibt, und
   - der Grad der zeitlichen Verschiebung, mit der die Symbolsequenz für das Referenzsignal auf das Trägersignal moduliert wird, den Abstand beider Objekte repräsentiert und/oder der Abstand beider Objekte anhand des Grads der zeitlichen Verschiebung ermittelt wird.

Das erfindungsgemäße Konzept basiert auf zunächst einmal bekannten Elementen. So wird zur Abstandsermittlung ein beispielsweise von dem zweiten Objekt an das erste Objekt gesendetes optisches Signal verwendet, das einen Modulationscode mit einer Sequenz von Symbolen aufweist. Bei diesem Modulationscode handelt es sich insbesondere um einen PRN-Code, also um eine Sequenz von PRN-Symbolen. Um das optische Empfangssignal aus dem Rauschen des Empfängers des ersten Objekts extrahieren zu können, wird ein im ersten Objekt erzeugtes optisches Referenzsignal mit dem optischen Empfangssignal korreliert. Als Beispiel für einen für diesen Zweck verwendbaren Korrelator sei auf einen optischen Kohärenz-Empfänger verwiesen.

Durch die Korrelation wird das extrem hochfrequente optische Signal, dessen Frequenz im Tera-Hertz-Bereich liegt, in ein elektrisches Signal gewandelt, das in einen um mindestens drei Größenordnungen niedrigeren Frequenzbereich verschoben ist. Damit lässt sich nun die weitere Signalverarbeitung mit herkömmlicher Hard- und Software realisieren.

Das optische Referenzsignal, das im ersten Objekt mittels eines beispielsweise Laser erzeugt wird, weist ein optisches Trägersignal auf, das die gleiche Frequenz wie das optische Empfangssignal hat. Auf dieses Trägersignal wird nun die gleiche Sequenz von Symbolen wie im Empfangssignal, also der Modulationscode des Empfangssignals aufmoduliert. Die Symbolsequenz wird so lange in der Phase relativ zum Trägersignal verschoben, bis man anhand des Korrelationswerts erkennt, dass das Referenzsignal in Phase mit dem Empfangssignal liegt oder zumindest diesem Zustand recht nahekommt.

Die Verschiebung der Symbolsequenz für das Referenzsignal, mit der die Symbolsequenz auf das Trägersignal moduliert wird, kann grundsätzlich lediglich symbolweise erfolgen. Damit ist der minimal mögliche Phasen-Shift auf die Dauer eines Symbol-Intervalls beschränkt. Dies kann aber für bestimmte Anwendungen zu ungenau sein. So könnte man beispielsweise durch eine Phasenverschiebung in der Größenordnung eines Symbol-Intervalls des Modulationscodes des Empfangssignals bereits zu groß sein, womit man kein verwertbares Korrelationssignal bzw. keinen verwertbaren Korrelationswert mehr erhalten würde.

Erfindungsgemäß wird daher vorgeschlagen, zusätzlich zu der vergleichsweise bereits groß aufgelösten Verschiebung der Symbolsequenz des Referenzsignals um ein Intervall eines Symbols oder um ein Vielfaches eines Intervalls eines Symbols auch noch eine Feinstverschiebung der Symbolsequenz zu ermöglichen. Diese Feinstverschiebung bewegt sich im Sub-Symbol-Bereich und ihr kleinster Shift kann beispielsweise weniger als 1/10, beispielsweise weniger als 1/20 der Dauer eines Symbol-Intervalls betragen, also weniger als z.B. 2,5 ps. Die Auflösung liegt sogar im Femtosekundenbereich und hängt u.a. von der Auflösung des DACs ab, da die Verzögerungsstrecke wertkontinuierlich arbeitet. D.h., dass man bei einem 12 Bit DAC eine Auflösung bis zu 20 Femtosekunden erreichen kann, was einem Symbolanteil von 1/2500 entspricht. Statt einer analogen Delay-Linie kann ein digital ansteuerbares Zeitverzögerungsglied eingesetzt werden, womit der DAC als dezidiertes Element entfallen würde. Die sehr hohe Auflösung wird erfindungsgemäß durch gesteuerte zeitliche Verzögerung der Symbolsequenz für das Referenzsignals erzielt, indem diese als digitales Signal, also als binäres Signal in der analogen oder digitalen Domäne, ein Zeitverzögerungsglied passiert, das dem Modulator für das Trägersignal vorgeschaltet ist. Das Zeitverzögerungsglied wiederum ist mittels eines ebenfalls digitalen elektrischen Zeitverzögerungssteuersignals gesteuert, das ggfs. einer Digital-Analog-Wandlung unterzogen wird, um dann als elektrisches Analogsignal oder als Digitalsignal das Zeitverzögerungsglied zu steuern.

Für die Signalverarbeitung wird typischerweise ein digitaler Signalprozessor, ein FPGA oder ein anderer Typ von Signalverarbeitungseinheit eingesetzt, dessen Eingangsgröße ein den Korrelationswert beschreibendes elektrisches Analog-Signal ist und der zwei elektrische Digital-Signale ausgibt, von denen das eine die Symbolsequenz für das Referenzsignal beschreibt und das andere für die Subsymbolverschiebung der Symbolsequenz für das Referenzsignal sorgt, wobei das derart zeitlich verschobene elektrische Digitalsignal der Symbolsequenz auf den Modulator gegeben wird, in dem die Symbolsequenz dann auf das optische Trägersignal aufmoduliert wird.

Mit dem erfindungsgemäßen Konzept lässt sich das optische Empfangssignal wesentlich genauer nachführen. Außerdem kann man durch Aufbringen einer bekannten kleinen Störung (man spricht in diesem Zusammenhang im Englischen auch von "dither") auf das elektrische digitale Zeitverzögerungssteuersignal, d.h. auf das Feinstverschiebungssignal (Richtung der Verschiebung der Symbolsequenz - verzögernd oder vorauseilend - ist bekannt) die Korrelation bewusst beeinflussen, und zwar aufgrund der extrem hohen Auflösung in einem so geringen Maße, dass das Tracking weiterhin funktioniert. Anhand der Veränderung des Korrelationswerts, also wenn man die Korrelation auswertet und in Relation zu dem bekannten Störsignal setzt, kann man herausfinden, auf welchem Ast (links oder rechts des Korrelationspeak) der Korrelationsfunktion man sich befindet. Diese Vorgehensweise ist deutlich schwieriger und komplizierter zu realisieren, wenn man entsprechend durch symbolweises Verschieben der Symbolsequenz für das Referenzsignal bei der Aufmodulation der Symbolsequenz auf das optische Trägersignal verfährt. Dies ermöglicht es mit Vorteil, die Symbolsequenz für das Referenzsignal im Zeitmultiplexverfahren zusätzlich feinst zu verschieben, um einen Early-Middle-Late-Algorithmus zu emulieren. Auf diese Art und Weise kann man auf Frequenzverschiebungen des optischen Empfangssignals und auf Phasenverschiebungen seines Codes (Symbolsequenz) reagieren und damit die Nachverfolgung des Empfangssignals bei Veränderungen des Abstandes der beiden Objekte zuverlässiger garantieren.

Hierzu ist gemäß dem Anspruch 1 ferner vorgesehen,
- dass die Symbolsequenz für das Referenzsignal zur Reduktion der Gefahr des Verlustes der Nachverfolgung des Empfangssignals durch das Trägersignal mit aufmoduliertem Referenzsignal bei einer Veränderung der Frequenz und/oder Phase des Empfangssignals zu höheren Werten in Folge einer Verringerung des Abstandes der beiden Objekte und zu niedrigeren Werten in Folge einer Vergrößerung des Abstandes der beiden Objekte durch Modulation mittels eines Zeitmultiplex-Signals um jeweils vorbestimmte Ausmaße d.h. Zeit-Offsets zwecks Emulation einer Frequenzänderung nacheilend oder vorauseilend verschoben wird, ohne dass der Korrelationswert einen vorbestimmten, einen Mindestgrad an Korrelation definierenden Schwellwert unterschreitet, wobei der Korrelationswert von einem ersten Wert, der ein Nacheilen der Symbolsequenz für das Referenzsignal gegenüber derjenigen des Empfangssignals repräsentiert (und damit sozusagen eine mit einer Verringerung des Abstandes der beiden Objekte einhergehenden Vergrößerung der Frequenz des Empfangssignals emuliert), auf einen Optimalwert, der im Wesentlichen die Synchronisation der Symbolsequenzen für das Referenzsignal und derjenigen des Empfangssignals repräsentiert (und damit sozusagen einen im Wesentlichen gleichbleibenden Abstand beider Objekte emuliert), und ferner von diesem Optimalwert auf einen zweiten Korrelationswert, der ein Vorauseilen der Symbolsequenz für das Referenzsignal gegenüber derjenigen des Empfangssignals repräsentiert (und mit anderen Worten damit eine mit einer Vergrößerung des Abstandes der beiden Objekte einhergehenden Verringerung der Frequenz des Empfangssignals emuliert) wechselt und zwischen diesen Werten umgekehrt oder zyklisch wechselt, um die Symbolsequenz für das Referenzsignal im Zeitmultiplexverfahren zur Emulation eines Early-Middle-Late-Algorithmus zusätzlich feinst zu verschieben und
- wobei im Falle einer Abstandsänderung der beiden Objekte die dann erfolgende Frequenz- und/oder Phasenverschiebung zu entweder einer höheren Frequenz oder einer niedrigeren Frequenz des Empfangssignals durch Wahl eines Nacheilens oder Vorauseilens der Symbolsequenz für das Referenzsignal gegenüber derjenigen des Empfangssignals kompensiert wird (und damit bei einer Vergrößerung oder Verringerung des Abstandes die Nachverfolgung des Empfangssignals vereinfacht ist und zuverlässiger erfolgt).

Diese zusätzliche Modulation des Feinstverschiebungssignals, d.h. des elektrischen Zeitverzögerungssignals erfolgt im Zeitmultiplexverfahren, d.h. in der Zeitebene und damit zeitlich hintereinander. Hierbei wird vom Prinzip her das an sich bekannte Early-Middle-Late-Verfahren zur Nachverfolgung von Navigationssatelliten-Trägersignalen eingesetzt, die sich hinsichtlich der Frequenz und der Phase von aufmodulierten Codes verschieben, und zwar aufgrund von Änderungen der Entfernung des Satelliten zum Empfänger. Allerdings wird bei der Erfindung vorteilhafterweise lediglich ein einziger optischer Empfänger (oder anders ausgedrückt ein einziger optischer Empfangskanal) benötigt, während die Hardware-Implementierungen des Early-Middle-Late-Verfahrens in seiner Anwendung im RF-Bereich, wie es bei Navigationssatellitensystemen der Fall ist, drei Empfänger bzw. drei Empfangskanäle benötigt, was sich nachteilig auf die Leistung auswirkt, die das Empfangssignal aufweisen muss, um nach Aufteilung auf die drei Empfangskanäle (mit den diesen zugeordneten elektrischen Schaltungen wie z. B. den Korrelatoren) noch ausreichend groß zu sein. Diese Einschränkung gilt für den erfindungsgemäßen Ansatz der Emulation des Early-Middle-Late-Verfahrens nicht, was ein wesentlicher Vorteil gegenüber den im Stand der Technik bekannten Realisierungen dieses Verfahrens ist.

In zweckmäßiger Weiterbildung der Erfindung kann vorgesehen sein, dass das Zeitverzögerungssteuersignal ein elektrisches Digitalsignal ist, das in einem Digital-Analog-Wandler in ein elektrisches Analogsignal umgewandelt wird, wobei das elektrische Analogsignal das Zeitverzögerungsglied steuert, oder dass das Zeitverzögerungssteuersignal ein elektrisches Digitalsignal ist und dass Zeitverzögerungsglied digital arbeitet und von dem Digitalsignal angesteuert wird.

Wie bereits oben erwähnt, wird das Empfangssignal von dem ersten Objekt durch einen kohärenten Empfänger (optischer Kohärenz-Empfänger) empfangen, der die Korrelation und eine Umsetzung der Korrelation in ein elektrisches Analogsignal ausführt, das zur weiteren Verarbeitung und insbesondere zur Bildung des Korrelationswerts und zur Erzeugung der Verschiebung der Symbolsequenz des Referenzsignals relativ zur Phase des Trägersignals in ein Digitalsignal genutzt wird.

Ein bevorzugtes Anwendungsgebiet der Erfindung betrifft den Fall, dass es sich bei den beiden Objekten um zwei Satelliten handelt und/oder dass der Modulationscode eine PRN-Sequenz von Symbolen oder einen Goldcode aufweist. Grundsätzlich gilt, dass der Modulationscode beliebig gewählt sein kann.

Wie ebenfalls bereits oben beschrieben, können die beiden zuvor erwähnten Satelliten Teil einer Satelliten-Konstellation sein, bei der sich mehrere Satelliten auf einem gemeinsamen Orbit bewegen, wobei es sich bei dem Orbit insbesondere um einen sich in mittlerer Entfernung zur Erde befindenden MEO-Orbit handelt, und wobei die beiden Satelliten innerhalb des Orbit benachbart zueinander sind. Alternativ können die beiden oben genannten Satelliten Teil einer Satelliten-Konstellation sein, bei der sich mindestens ein erster Satellit auf einem ersten Orbit, z.B. einem in mittlerer Entfernung zur Erde befindenden MEO-Orbit, und mindestens ein zweiter Satellit auf einem von dem ersten Orbit verschiedenen zweiten Orbit, z.B. einem in geringer Entfernung zur Erde befindenden LEO-Orbit, befindet.

Die für die Erfindung wesentlichen Merkmale sind wie folgt:
- Die Korrelation von Referenzsignal und Empfangssignal findet in der optischen Domäne statt, die anders als die elektrische Domäne im Wesentlichen nicht bandbreitenlimitiert ist.
- Die optische Korrelation reduziert die Bandbreitenanforderungen an den Empfänger und sämtliche diesem nachgeschalteten Komponenten. Somit kann eine höhere Auflösung erreicht werden, ohne die Komplexität des Empfängers zu vergrößern. Es erfolgt eine zweistufige Referenzsignalerzeugung, und zwar
   - eine symbolweise Verschiebung der digitalen Symbolsequenz (Grobverschiebung bzw. diskontinuierliche Verschiebung) und
   - Erzeugung eines Signals zur quasi analogen (auf die Zeitdomäne bezogen), d. h. quasi kontinuierlichen Feinstverschiebung der Symbolsequenz vor deren Aufmodulation auf das optischen Trägersignal.
- Die in der elektrischen Domäne vorgenommene Verschiebung verändert nicht die optische Phase des Signals, was andernfalls den optischen PLL beeinträchtigen würde.
- Das elektrische Signal für die Sub-Symbolintervall-Verschiebung der Phase der Symbolsequenz erhöht die maximal mögliche Auflösung bei der Entfernungsmessung in Schritten von weniger als einer Pikosekunde.
- Die phasenmodulierte Datenübertragung über den optischen Kanal lässt Datenraten von mindestens 50 Mbps zu.
- Das elektrische Signal für die Feinstverschiebung erlaubt die Modulation eines Zeitmultiplex-Signals (Time Division Multiplexed Signal) zur Vermeidung der Verwendung von drei Empfängern (für early, middle und late bei der Korrelation), was von Hochfrequenzempfängern an sich bekannt ist, aber sehr komplex bei optischen Datenübertragungssystemen ist. Nach der Erfindung bedarf es lediglich eines einzigen in diesen Fall optischen Empfängers mit einem einzigen Empfangskanal, so dass die Leistung des Empfangssignals den wegen Aufteilung auf mehrere Empfangskanäle gegebenen Einschränkungen an eine bestimmte Mindestgröße nicht unterliegt.
- Eine hochauflösende Drift-Interpolation des Referenzsignals ist mit dem elektrischen Signal für die Sub-Symbolintervall-Verschiebung möglich.

Anders ausgedrückt wird also bei dem Verfahren zur Ermittlung des Abstands zweier Objekte, insbesondere zweier Satelliten, unter Verwendung eines optischen Signals, das von dem einen Objekt an das andere Objekt gesendet wird, ein Referenzlaser mittels einer optischen Phasenregelschleife auf den Takt des optischen Eingangssignals synchronisiert. Eine Verzögerungsregelschleife wird verwendet, um das optische Eingangssignal mit dem auf Basis des Referenzlasers erzeugten Referenzsignals zu korrelieren. Erfindungsgemäß wird dabei eine Grobjustage der Symbolsequenz im Referenzsignal durch symbolweises Verschieben dieser Sequenz realisiert. Vorzugsweise wird nun zusätzlich zu dieser Grobverschiebung eine Feinstverschiebung vorgenommen, indem ein Subsymbol-Verschiebungssignal (oben mit Zeitverzögerungssteuersignal bezeichnet) generiert wird, das für eine Verschiebung der Symbolsequenz um einen Bruchteil des Intervalls eines Symbols sorgt.

Das erfindungsgemäße Verfahren lässt sich grundsätzlich in sämtlichen Bereichen einsetzen, in denen die Entfernungsmessung mittels Laser eingesetzt wird. Im Besonderen lässt sich die Erfindung einsetzen für die Satellitennavigation (GNSS), für die Geodäsie und in der optical ranging technology (siehe beispielsweise in [2] und [3]).

Die Erfindung wird nachfolgend unter Bezugnahme auf die Zeichnung näher erläutert. Im Einzelnen zeigen dabei:
- Fig. 1: ein Beispiel für eine Satelliten-Konstellation, bei der die Erfindung eingesetzt werden kann,
- Fig. 2: ein Blockdiagramm der Hauptkomponenten eines Systems zur Umsetzung des erfindungsgemäßen Verfahrens und
- Fign. 3 und 4: Signalverläufe mit den korrespondierenden Korrelationswerten für verschiedene Verschiebungen der Symbolsequenz im Sub-Symbolintervall-Bereich.

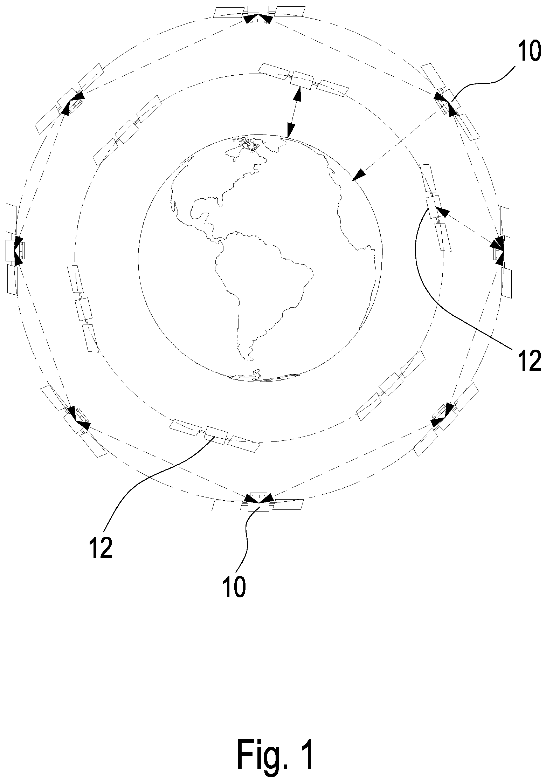

In Fig. 1 ist eine Satelliten-Konstellation gezeigt, bei der sich mehrere Satelliten 10 auf einem MEO-Orbit bewegen. Jeweils benachbarte MEO-Satelliten 10 stehen durch optische Datenkommunikation in Verbindung miteinander. Auf einem erdnäheren LEO-Orbit befinden sich weitere (LEO-)Satelliten 12, die durch ebenfalls optische Datenkommunikation mit den MEO-Satelliten 10 in Verbindung stehen und mittels Down- und Up-Links mit Bodenstationen auf der Erde kommunizieren.

Einige Besonderheiten einer solchen Satelliten-Konstellation, die allerdings durch die Erfindung von untergeordneter Bedeutung sind, sind in WO2019/ 011919 A1 beschrieben.

Für hochgenaue Anwendungen in z.B. der Geodäsie ist neben einer Zeitsynchronisierung der Satelliten auch die Kenntnis der exakten Entfernung benachbarter MEO-Satelliten 10 oder zwischen einem MEO-Satelliten 10 und einem LEO-Satelliten 12 und der Verfolgung von deren Veränderungen von großer Bedeutung. Hierzu kann man sich z.B. des Verfahrens des "optical ranging" bedienen.

Für die Entfernungsmessung wird das von einem ersten Satelliten empfangene optische (Empfangs-)Signal, das von einem zweiten Satelliten (ggf. auf Veranlassung eines zuvor vom ersten Satelliten an den zweiten Satelliten gesendeten optischen Signals) an den ersten Satelliten gesendet wird, verarbeitet und ausgewertet.

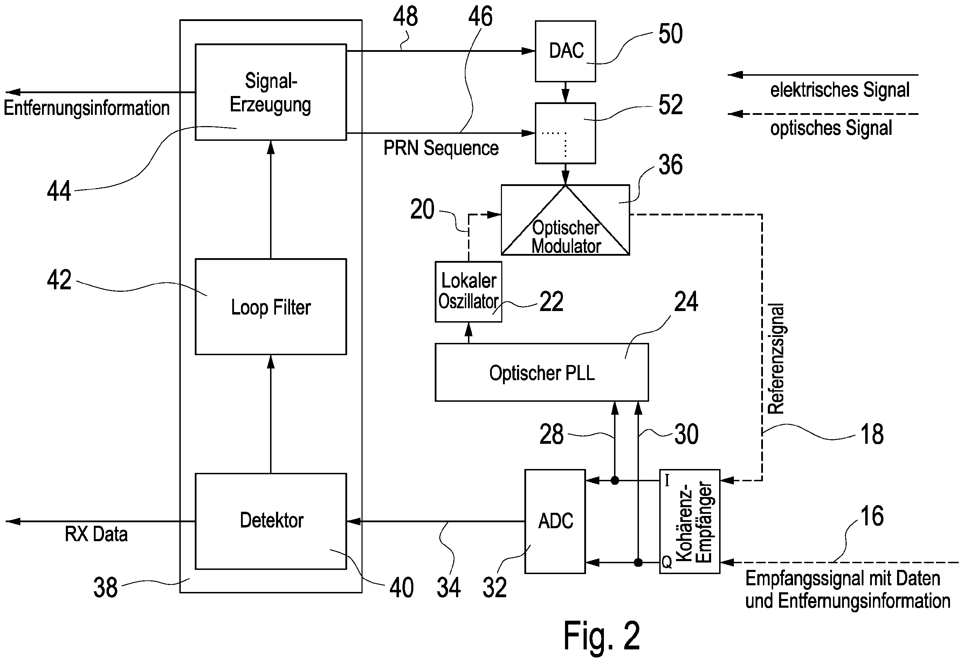

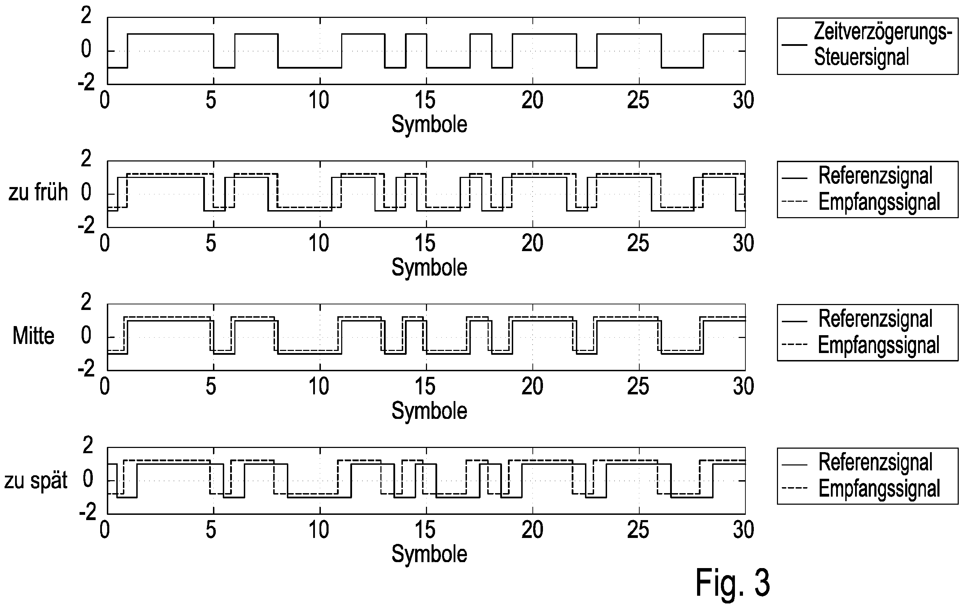

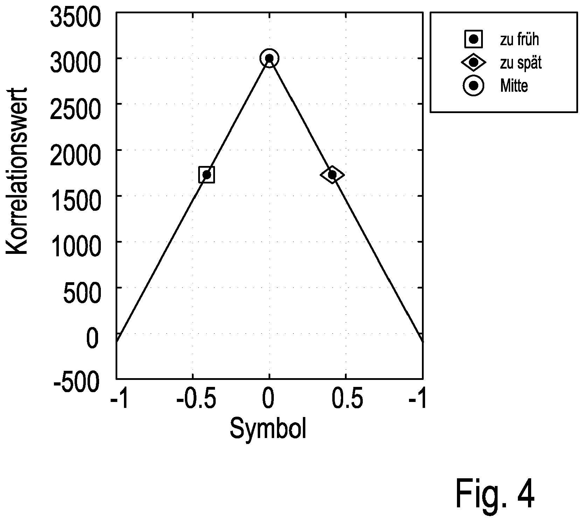

Zunächst muss dabei der erste Satellit das von dem zweiten Satelliten kommende Empfangssignal 16 aus dem Rauschen extrahieren. Gemäß dem in Fig. 2 gezeigten Beispiel einer Verarbeitungseinheit 14 erfolgt dies in an sich bekannter Weise durch die Bildung der Korrelation eines im ersten Satelliten generierten optischen Referenzsignals 18 mit dem Empfangssignal 16. Beide Signale weisen die gleiche Trägerfrequenz (typischerweise im THz-Bereich) auf und sind in gleicher Weise moduliert. Bei der Modulation handelt es sich (ebenfalls typischerweise) um eine Sequenz von Symbolen (z.B. PRN-Sequenz). Durch Phasenverschiebung der Symbolsequenz, die zur Modulation des Referenzsignals benötigt wird, sucht man nun nach dem Maximum der Korrelationsfunktion (siehe auch die Fign. 3 und 4). Ein wesentliches Merkmal der Erfindung ist die besonders hochauflösende zeitliche Verschiebung der Symbolsequenz, mit der diese auf das Trägersignal 20, das nach Modulation mit der Symbolsequenz das Referenzsignal 18 bildet, moduliert wird.

Gemäß Fig. 2, in der optische Signale bzw. Signalpfade mittels gestrichelter Linien und elektrische Signale bzw. Signalpfade durch durchgezogene Linien kenntlich gemacht sind, wird das optische Trägersignal 20 mittels eines Lasers 22 erzeugt. Der Laser 22 wird elektrisch durch eine optische PLL 24 gesteuert, die von einem Kohärenz-Empfänger 26 die I- und Q- Ausgangssignale 28, 30 empfängt, welche ebenfalls elektrische Signale sind und eine wesentlich geringere Frequenz aufweisen (typischerweise im MHz-Bereich). Die beiden Ausgangssignale 28, 30 sind Analogsignale und werden in einem Analog-Digital-Wandler (ADC) 32 in ein elektrisches Digitalsignal, d.h. in ein binäres Signal 34 im kontinuierlichen Zeitbereich (analoge Domäne) umgesetzt. In Abhängigkeit vom aktuellen Wert der Korrelation (Korrelationswert) wird das optische Trägersignal 20 phasenverschoben und in einem optischen Modulator 36 moduliert. Die Steuerung des Modulators 36 wird nachfolgend beschrieben.

Ein z.B. Digitalsignalprozessor 38 (Controller) empfängt das Signal 34 und ein Detektor 40 wertet die Korrelationsfunktion aus. Nach einer Filterung durch z.B. einen Loop-Filter 42 erfolgt in der Einheit 44 die Erzeugung zweier Digitalsignale 46, 48, die zur Steuerung der Phasenverschiebung, mit der die Symbolsequenz des Referenzsignals 18 auf dessen optisches Trägersignal 20 zeitlich versetzt optisch moduliert wird. Diese zeitliche Verschiebung repräsentiert die Entfernung der beiden Satelliten. Die Einheit 44 gibt ein entsprechendes Signal aus.

Das elektrische Digitalsignal 46 bildet die Symbolsequenz ab. Dieses Digitalsignal 46 wird entsprechend zeitverzögert entweder von dem Block 44 ausgegeben oder aber der Block 44 steuert einen Symbolsequenz-Generator an, der dann das Digitalsignal 46 ausgibt. Die Ausgabe des Digitalsignals 46 erfolgt entsprechend zeitverzögert, was aber lediglich in einer vergleichsweise groben Auflösung erfolgen kann, da es hier lediglich zu Verschiebungen mit einer kleinsten Zeiteinheit kommen kann, die gleich der Dauer eines Intervalls eines Symbols ist.

Will man aber, wie nach der Erfindung vorgesehen, auch im Subsymbolintervall-Bereich verschieben können, so wird erfindungsgemäß das zweite elektrische Digitalsignal 48 erzeugt, mit dem die Weitergabe des ersten Digitalsignals 46 an dem optischen Modulator 36 verzögert werden kann. Hierzu wird das zweite Digitalsignal 48 in einem Digital-Analog-Wandler 50 in ein elektrisches Analog-Signal umgesetzt, mit dem sich ein Zeitverzögerungsglied 52 steuern lässt, das das erste Digitalsignal 46 um die durch das zuvor genannte Analog-Signal spezifizierte Zeit verzögert ausgibt und an den Modulator 36 weitergibt. Dieser Prozess kann auch in der Digital-Domain ablaufen, indem das Zeitverzögerungslied 52 digital angesteuert wird, der Digital-Analog-Wandler 50 also entfällt.

Mit diesem Ansatz ist es nun möglich, dass die Symbolsequenz für das Referenzsignal 18 repräsentierende erste Digitalsignal 46 im Sub-Symbolbereich zu verschieben, wie es in Fig. 3 gezeigt ist. In Fig. 4 ist anhand des Korrelationsverlaufs gezeigt, dass durch diese Feinstjustage im Sub-Symbolintervallbereich der Korrelationswert im Bereich des Korrelationspeak bleibt, das Tracking also auch bei kleinsten Abstandsveränderungen der beiden Satelliten zuverlässig durchgeführt werden kann, was bei einer Phasenverschiebung um Symbolintervalle als kleinste Zeiteinheit nicht möglich ist. Erfindungsgemäß kann also die zeitliche Verschiebung der Symbolsequenz für das Referenzsignal 18, die auf das Trägersignal 20 moduliert wird, so gewählt und eingestellt werden, dass der Korrelationswert der Korrelationsfunktion maximiert wird und/oder ist und/oder bleibt.

Es ist zu vermuten, dass sich mit dem erfindungsgemäßen Konzept der Abstand zweier beispielsweise MEO-Satelliten im Sub-Millimeter-Bereich bestimmen und sich eine Abstandsveränderung hochgenau nachverfolgen lässt.

Das Ausführungsbeispiel zeigt, dass sich die Erfindung insbesondere durch ein oder mehrere der folgenden Merkmale auszeichnet:
- Der Kohärenz-Empfänger empfängt eine PRN-Sequenz und Daten von weit entfernt und untersucht die Interferenz mit dem lokal erzeugten Referenzsignal in der optischen Domäne. Die Schleife ist verriegelt bei konstruktiver Interferenz durch Nachführung des Korrelationsmaximums.
- Die Ausgänge des Kohärenz-Empfängers werden verwendet, um den Restphasenfehler zwischen dem Eingangssignal und dem Referenzsignal zu berechnen. Dieser Phasenfehler wird der optischen PLL zugeführt, um den Laser zu "verriegeln".
- Die Ausgangssignale des Kohärenz-Empfängers werden zur Wiedergewinnung der Daten abgetastet. Der ADC braucht lediglich so schnell zu sein, dass die Datengewinnung korrekt erfolgt. Er braucht nicht das gesamte Spektrum der PRN-Sequenz abzudecken.
- Der Detektor demultiplext digital das Datensignal (Phase des Signals) und den Korrelationswert (Amplitude des Signals). Die Veränderungsrate des Korrelationssignals (ansteigend, abfallend oder 100%ige Korrelation) wird bestimmt entweder durch
   - einen Early-Middle-Late-Algorithmus gemäß z.B. [4], der durch Hinzufügung eines Zeit-Offset zum Signalgenerator emuliert wird (time Division Multiplexed Time Offset) oder
   - Schätzung der Dopplerzeitverschiebung aus der empfangenen Datenphase, da die Dopplerverschiebung (Phase) proportional ist zur Dopplerzeitverschiebung (siehe z.B. in [4]).
- Zur Stabilisierung der "closed loop"-Antwort des DLL (Delay Locked Loop) dient ein Loop-Filter.
- Der Signalgenerator erzeugt das die Referenz-PRN-Sequenz repräsentierende Signal. Die aktuelle Phase der erzeugten PRN-Sequenz (Maximierung der Korrelation durch die DLL) repräsentiert die Entfernungsinformation. Die PRN-Sequenz-Erzeugung wird durchgeführt in zwei Schritten:
   - digitale Erzeugung einer binären PRN-Sequenz (Grobauflösung)
   - Erzeugung eines analogen Signals zur Verschiebung der PRN-Sequenz im Subsymbolintervallbereich (Feinstverschiebung)
- Das Signal für die Grobverschiebung (Digital Coarse PNN Sequence) passiert ein analoges Zeitverzögerungsglied, dessen Zeitverzögerungsgröße gesteuert wird durch das analoge Signal für die Feinstverschiebung. Dies resultiert in einem elektrischen Signal, das die Auflösung im Zeitbereich wie das analoge Feinstverschiebungssignal hat. Der mit diesem Signal erzielbare Bereich der Zeitverschiebung ist größer als das Intervall eines Symbols, wodurch ein kontinuierliches Verschieben der Phase der PRN-Sequenz für das Referenzsignal erzielt werden kann. Drei verschieden verschobene Signale sind in Fig. 3 gezeigt (siehe oben). Das Ergebnis der Korrelationsfunktion bei Verschiebung entsprechend den drei in Fig. 2 gezeigten Zuständen "early", "middle" und "late" ist in Fig. 4 gezeigt.
- Das elektrische Signal wird phasenmoduliert auf das optische Signal des Lasers (optisches Trägerfrequenzsignal) moduliert und bildet das optische Referenzsignal.

### BEZUGSZEICHENLISTE

- 10: MEO-Satelliten
- 12: LEO-Satelliten
- 14: Verarbeitungseinheit
- 16: optisches Empfangssignal
- 18: optisches Referenzsignal
- 20: optisches Trägersignal
- 22: Laser
- 24: optische PLL
- 26: Kohärenz-Empfänger
- 28: elektrisches Ausgangssignal
- 30: elektrisches Ausgangssignal
- 32: Analog-Digital-Wandler
- 34: elektrisches Digitalsignal
- 36: optischer Modulator
- 38: Digitalsignalprozessor
- 40: Detektor
- 42: Loop-Filter
- 44: Signalerzeugungseinheit
- 46: elektrisches Digitalsignal
- 48: elektrisches Digitalsignal (Zeitverzögerungssteuersignal bzw. Sub-Symbol- Verschiebungssignal)
- 50: Digital-Analog-Wandler
- 52: Zeitverzögerungsglied

### LITERATURVERZEICHNIS

[1] Poliak, J., Calvo, R.M., Surof, J., Richerzhagen and Mathias, R. Wolf 2018. Laboratory Demonstrator of Optical Inter-satellite Links for the Kepler System*.*
[2] Sheard, B., Heinzel, G., Danzmann, K., Shaddock, D., Klipstein, W. and Folkner, W. 2012. Intersatellite laser ranging instrument for the GRACE follow-on mission. Journal of Geodesy. 86, 12 (2012), 1083-1095.
[3] Sutton, A., McKenzie, K., Ware, B. and Shaddock, D.A. 2010. Laser ranging and communications for LISA. Optics express. 18, 20 (2010), 20759-20773.
[4] Kaplan, E. and Hegarty, C. 2005. Understanding GPS: principles and applications. Artech house.

## Patentansprüche

1. Verfahren zur Ermittlung des Abstands zweier Objekte, insbesondere zweier Satelliten, unter Verwendung eines optischen Signals, das von dem einen Objekt an das andere Objekt gesendet wird, wobei bei dem Verfahren
- ein erstes Objekt von einem zweiten Objekt ein mittels eines Codes moduliertes optisches Signal mit einer bekannten Trägerfrequenz als optisches Empfangssignal (16) empfängt, wobei der Modulationscode eine Sequenz von Symbolen aufweist, die jeweils gleich lange Intervalle einnehmen, und
- in dem ersten Objekt
- ein optisches Referenzsignal (18) erzeugt wird, das als ein optisches Trägersignal (20) mit der gleichen Frequenz wie diejenige des Empfangssignals (16) und mit einer aufmodulierten, der Symbolsequenz des Empfangssignals (16) gleichenden Symbolsequenz ausgebildet ist,
- die Korrelation des Empfangssignals (16) mit dem Referenzsignal (18) ermittelt wird,
- ein den Grad der Korrelation beschreibender Korrelationswert als ein elektrisches Signal erzeugt wird, das eine niedrigere Frequenz als das Empfangssignal (16) aufweist,
- die Symbolsequenz für das Referenzsignal (18) mittels eines optischen Modulators (36) zeitlich verschoben auf das Trägersignal (20) moduliert wird, wobei die zeitliche Verschiebung anhand der Größe des Korrelationswerts bestimmt wird, so dass das Referenzsignal (18) mit dem Empfangssignal (16) in Phase gelangt,
- eine Verschiebung der Symbolsequenz des Referenzsignals (18) um eine Zeitdauer, die gleich dem Intervall eines Symbols oder gleich einem ganzzahligen Vielfachen des Intervalls ist, durch entsprechende zeitverzögerte Modulation des Trägersignals (20) mittels eines die Symbolsequenz des Referenzsignals (18) aufweisenden, elektrischen Digitalsignals (46) erfolgt,
- eine Verschiebung der Symbolsequenz des Referenzsignals (18) um eine Zeitdauer, die kleiner ist als das Intervall eines Symbols, durch Ansteuerung eines dem Modulator (36) vorgeschalteten Zeitverzögerungsglieds (52) erfolgt, welches das die Symbolsequenz des Referenzsignals (18) aufweisende, elektrische Digitalsignal (46) empfängt und dieses Digitalsignal (46) um die durch ein elektrisches Zeitverzögerungssteuersignal (48) für das Zeitverzögerungsglied (52) bestimmte Verzögerungszeit zeitverzögert an den Modulator (36) weitergibt,
- der Grad der zeitlichen Verschiebung, mit der die Symbolsequenz für das Referenzsignal (18) auf das Trägersignal (20) moduliert wird, den Abstand beider Objekte repräsentiert und/oder der Abstand beider Objekte anhand des Grads der zeitlichen Verschiebung ermittelt wird, **dadurch gekennzeichnet, dass**
- die Symbolsequenz für das Referenzsignal (18) zur Reduktion der Gefahr des Verlustes der Nachverfolgung des Empfangssignals (16) durch das Trägersignal (20) mit aufmoduliertem Referenzsignal (18) bei einer Veränderung der Frequenz und/oder der Phase des Empfangssignals (16) zu höheren Werten in Folge einer Verringerung des Abstandes der beiden Objekte und zu niedrigeren Werten in Folge einer Vergrößerung des Abstandes der beiden Objekte durch Modulation mittels eines Zeitmultiplex-Signals um jeweils vorbestimmte Ausmaße d.h. Zeit-Offsets nacheilend oder vorauseilend verschoben wird, ohne dass der Korrelationswert einen vorbestimmten, einen Mindestgrad an Korrelation definierenden Schwellwert unterschreitet, wobei der Korrelationswert von einem ersten Wert, der ein Nacheilen der Symbolsequenz für das Referenzsignal (18) gegenüber derjenigen des Empfangssignals (16) repräsentiert, auf einen Optimalwert, der im Wesentlichen die Synchronisation der Symbolsequenzen für das Referenzsignal (18) und derjenigen des Empfangssignals (16) repräsentiert, und ferner von diesem Optimalwert auf einen zweiten Korrelationswert, der ein Vorauseilen der Symbolsequenz für das Referenzsignal (18) gegenüber derjenigen des Empfangssignals (16) repräsentiert wechselt und zwischen diesen Werten umgekehrt oder zyklisch wechselt, um die Symbolsequenz für das Referenzsignal im Zeitmultiplexverfahren zur Emulation eines Early-Middle-Late-Algorithmus zusätzlich feinst zu verschieben, und
- im Falle einer Abstandsänderung der beiden Objekte die dann erfolgende Frequenzverschiebung zu entweder einer höheren Frequenz oder einer niedrigeren Frequenz des Empfangssignals (16) und/oder Phasenverschiebung durch Wahl eines Nacheilens oder Vorauseilens der Symbolsequenz für das Referenzsignal (18) gegenüber derjenigen des Empfangssignals (16) kompensiert wird.

2. Verfahren nach Anspruch 1, **dadurch gekennzeichnet, dass** das Zeitverzögerungssteuersignal (48) mittels des Zeitmultiplex-Signals moduliert wird.

3. Verfahren nach Anspruch 1 oder 2, **dadurch gekennzeichnet, dass** das Zeitverzögerungssteuersignal (48) ein elektrisches Digitalsignal ist, das in einem Digital-Analog-Wandler (50) in ein elektrisches Analogsignal umgewandelt wird, wobei das elektrische Analogsignal das Zeitverzögerungsglied (52) steuert, oder dass das Zeitverzögerungssteuersignal (48) ein elektrisches Digitalsignal ist und dass Zeitverzögerungsglied (52) digital arbeitet und von dem Digitalsignal angesteuert wird.

4. Verfahren nach einem der Ansprüche 1 bis 3, **dadurch gekennzeichnet, dass** das Empfangssignal (16) von dem ersten Objekt durch einen kohärenten Empfänger (26) empfangen wird, der die Korrelation und eine Umsetzung der Korrelation in ein elektrisches Analogsignal ausführt, das zur weiteren Verarbeitung und insbesondere zur Bildung des Korrelationswerts und zur Erzeugung der zeitlichen Verschiebung der Symbolsequenz für das Referenzsignal (18) in ein elektrisches Digitalsignal (34) umgesetzt wird.

5. Verfahren nach einem der Ansprüche 1 bis 4, **dadurch gekennzeichnet, dass** es sich bei den beiden Objekten um zwei Satelliten (10, 12) handelt.

6. Verfahren nach Anspruch 5, **dadurch gekennzeichnet, dass** die beiden Satelliten (10, 12) Teil einer Satelliten-Konstellation sind, bei der sich mehrere Satelliten auf einem gemeinsamen Orbit bewegen, wobei es sich bei dem Orbit insbesondere um einen sich in mittlerer Entfernung zur Erde befindenden MEO-Orbit handelt, und wobei die beiden Satelliten innerhalb des Orbit benachbart zueinander sind.

7. Verfahren nach Anspruch 5, **dadurch gekennzeichnet, dass** die beiden Satelliten (10, 12) Teil einer Satelliten-Konstellation sind, bei der sich mindestens ein erster Satellit auf einem ersten Orbit, z.B. einem in mittlerer Entfernung zur Erde befindenden MEO-Orbit, und mindestens ein zweiter Satellit auf einem von dem ersten Orbit verschiedenen zweiten Orbit, z.B. einem in geringer Entfernung zur Erde befindenden LEO-Orbit, befindet.

8. Verfahren nach einem der Ansprüche 1 bis 7, **dadurch gekennzeichnet, dass** der Modulationscode eine PRN-Sequenz von Symbolen oder einen Goldcode aufweist.

## Claims

1. A method for determining the distance between two objects, in particular between two satellites, by using an optical signal transmitted from one object to the other object, wherein in said method
- a first object receives from a second object an optical signal modulated by a code having a known carrier frequency as the optical receive signal (16), the modulation code comprising a sequence of symbols, each taking intervals of equal length, and
- in the first object
- an optical reference signal (18) is generated which is configured as an optical carrier signal (20) having the same frequency as that of the receive signal (16) and having a modulated symbol frequency equal to the symbol sequence of the receive signal (16),
- the correlation of the receive signal (16) with the reference signal (18) is determined,
- a correlation value describing the degree of correlation is generated as an electric signal having a lower frequency than the receive signal (16),
- the symbol sequence for the reference signal (18) is modulated onto the carrier signal (20) in a time-shifted manner by means of an optical modulator (36), the time shift being determined on the basis of the magnitude of the correlation value, so that the reference signal (18) comes into phase with the receive signal (16),
- the symbol sequence of the reference signal (18) is shifted by a period equal to the interval of a symbol or an integer multiple of the interval by corresponding time-delayed modulation of the carrier signal (20) by means of an electrical digital signal (46) comprising the symbol sequence of the reference signal (18),
- the symbol sequence of the reference signal (18) is shifted by a period shorter than the interval of a symbol, by controlling a time delay element (52) upstream of the modulator (36), which receives the electrical digital signal (46) comprising the symbol sequence of the reference signal (18) and passes said digital signal (46) on to the modulator (36) delayed by the delay time determined by an electrical time delay control signal (48) for the time delay element (52),
- the degree of the time shift with which the symbol sequence for the reference signal (18) is modulated onto the carrier signal (20) represents the distance between the two objects and/or the distance between the two objects is determined on the basis of the degree of time shift,
**characterized in that**
- the symbol sequence for the reference signal (18) for reducing the risk of loss of tracking of the receive signal (16) by the carrier signal (20) with modulated reference signal (18) in the event of a change in the frequency and/or the phase of the receive signal (16) to higher values as a result of a reduction in the distance between the two objects and to lower values as a result of an increase in the distance between the two objects by modulation by means of a time-division multiplex signal by respective predetermined amounts, i.e. time offsets, is shifted in a lagging or leading manner, without the correlation value falling below a predetermined threshold value defining a minimum degree of correlation, wherein the correlation value changes from a first value representing a lagging of the symbol sequence for the reference signal (18) relative to that of the receive signal (16) to an optimum value representing substantially synchronization of the symbol sequence for the reference signal (18) and that of the receive signal (16), and further changes from this optimum value to a second correlation value representing a leading of the symbol sequence for the reference signal (18) relative to that of the receive signal (16), and changes between these values inversely or cyclically in order to additionally finely shift the symbol sequence for the reference signal in time-division multiplexing for emulating an early-middle-late algorithm, and
- in the event of a change in the distance between the two objects, the frequency shift then occurring to either a higher frequency or a lower frequency of the receive signal (16) and/or phase shift is compensated for by selecting a lagging or leading of the symbol sequence for the reference signal (18) relative to that of the receive signal (16).

2. The method according to claim 1, **characterized in that** the time delay control signal (48) is modulated by the time-division multiplex signal.

3. The method according to claim 1 or 2, **characterized in that** the time delay control signal (48) is an electric digital signal converted in an analog-to-digital converter (50) into an electrical analog signal, wherein the electrical analog signal controls the time delay element (52), or **in that** the time delay control signal (48) is an electrical digital signal und the time delay element (52) operates in a digital manner and is controlled by the digital signal.

4. The method according to any one of claims 1 to 3, **characterized in that** the receive signal (16) is received from the first object by a coherent receiver (26) performing the correlation and a conversion of the correlation into an electrical analog signal which is converted into an electric digital signal (34) for further processing and in particular for forming the correlation value and for generating the time shift of the symbol sequence for the reference signal (18).

5. The method according to any one of claims 1 to 4, **characterized in that** the two objects are two satellites (10, 12).

6. The method according to claim 5, **characterized in that** the two satellites (10, 12) are part of a satellite constellation in which several satellites move on a common orbit, wherein the orbit particularly is an MEO orbit located at a medium distance from the Earth, and wherein the two satellites are adjacent to each other within the orbit.

7. The method according to claim 5, **characterized in that** the two satellites (10, 12) are part of a satellite constellation in which at least a first satellite is located on a first orbit, e.g. an MEO orbit located at a medium distance from the Earth, and at least a second satellite is located on a second orbit different from the first orbit, e.g. an LEO orbit located at a short distance from the Earth.

8. The method according to any one of claims 1 to 7, **characterized in that** the modulation code comprises a PRN sequence of symbols or a gold code.

## Revendications

1. Procédé de détermination de l'espacement de deux objets, en particulier de deux satellites, avec utilisation d'un signal optique qui est envoyé de l'un des objets à l'autre objet, procédé dans lequel
- un premier objet reçoit d'un deuxième objet, en tant que signal de réception (16) optique, un signal optique modulé au moyen d'un code et ayant une fréquence porteuse connue, le code de modulation présentant une séquence de symboles qui adoptent respectivement des intervalles de même longueur, et
- dans le premier objet,
- il est produit un signal de référence (18) optique qui est constitué en tant que signal porteur (20) optique ayant la même fréquence que celle du signal de réception (16) et avec une séquence de symboles modulée ressemblant à la séquence de symboles du signal de réception (16),
- la corrélation du signal de réception (16) avec le signal de référence (18) est établie,
- une valeur de corrélation décrivant le degré de corrélation est produite en tant que signal électrique qui présente une fréquence plus faible que le signal de réception (16),
- la séquence de symboles pour le signal de référence (18) est modulée au moyen d'un modulateur (36) optique, en étant décalée dans le temps, sur le signal porteur (20), le décalage temporel étant déterminé à l'aide de la grandeur de la valeur de corrélation de telle sorte que le signal de référence (18) vient en phase avec le signal de réception (16),
- un décalage de la séquence de symboles du signal de référence (18) d'une durée qui est égale à l'intervalle d'un symbole ou égale à un multiple entier de l'intervalle est effectué par une modulation temporisée correspondante du signal porteur (20) au moyen d'un signal numérique (46) électrique présentant la séquence de symboles du signal de référence (18),
- un décalage de la séquence de symboles du signal de référence (18) d'une durée qui est inférieure à l'intervalle d'un symbole est effectué par le pilotage d'un organe de temporisation (52), monté en amont du modulateur (36), qui reçoit le signal numérique (46) électrique présentant la séquence de symboles du signal de référence (18) et transmet au modulateur (36) ce signal numérique (46), retardé de la temporisation définie par un signal de temporisation (48) électrique pour l'organe de temporisation (52),
- le degré du décalage temporel avec lequel la séquence de symboles pour le signal de référence (18) est modulée sur le signal porteur (20) représente l'espacement de deux objets, et/ou l'espacement des deux objets est déterminé à l'aide du degré du décalage temporel, **caractérisé en ce que**
- la séquence de symboles pour le signal de référence (18) est décalée en retard ou en avance, de respectivement des ampleurs du décalage prédéfinies, c'est-à-dire du décalage temporel, par modulation au moyen d'un signal à multiplexage temporel, pour la réduction du risque de la perte du suivi du signal de réception (16) par le signal porteur (20) avec le signal de référence (18) modulé en cas de variation de la fréquence et/ou de la phase du signal de réception (16) vers des valeurs plus élevées à la suite d'une réduction de l'espacement des deux objets et vers des valeurs plus faibles à la suite d'une augmentation de l'espacement des deux objets sans que la valeur de corrélation passe au-dessous d'une valeur de seuil prédéterminée définissant un degré minimal de corrélation, la valeur de corrélation changeant d'une première valeur qui représente un retard de la séquence de symboles pour le signal de référence (18) par rapport à celle du signal de réception (16), vers une valeur optimale qui représente essentiellement la synchronisation des séquences de symboles pour le signal de référence (18) et de celles du signal de réception (16), et changeant en outre de cette valeur optimale vers une deuxième valeur de corrélation qui représente une avance de la séquence de symboles pour le signal de référence (18) par rapport à celle du signal de réception (16) et changeant entre ces valeurs inversement ou de façon cyclique, pour décaler en plus de la façon la plus fine la séquence de symboles pour le signal de référence dans le procédé de multiplexage temporel en vue de l'émulation d'un algorithme Early-Middle-Late, et
- en cas de variation d'espacement des deux objets, le décalage de fréquence qui en résulte ensuite soit vers une fréquence plus élevée soit vers une fréquence plus faible du signal de réception (16) et/ou le déphasage est compensé par le choix d'un retard ou d'une avance de la séquence de symboles pour le signal de référence (18) par rapport à celle du signal de réception (16).

2. Procédé selon la revendication 1, **caractérisé en ce que** le signal de temporisation (48) est modulé au moyen du signal à multiplexage temporel.

3. Procédé selon la revendication 1 ou 2, **caractérisé en ce que** le signal de temporisation (48) est un signal numérique électrique qui est converti en signal analogique électrique dans un convertisseur numérique-analogique (50), le signal analogique électrique commandant l'organe de temporisation (52), ou **en ce que** le signal de temporisation (48) est un signal numérique électrique et **en ce que** l'organe de temporisation (52) fonctionne de façon numérique et est piloté par le signal numérique.

4. Procédé selon l'une des revendications 1 à 3, **caractérisé en ce que** le signal de réception (16) en provenance du premier objet est reçu par un récepteur (26) cohérent qui réalise la corrélation et une transformation de la corrélation en un signal analogique électrique qui est transformé en un signal numérique (34) électrique pour la suite du traitement et en particulier pour la formation de la valeur de corrélation et pour la production du décalage temporel de la séquence de symboles pour le signal de référence (18).

5. Procédé selon l'une des revendications 1 à 4, **caractérisé en ce que**, concernant les deux objets, il s'agit de deux satellites (10, 12).

6. Procédé selon la revendication 5, **caractérisé en ce que** les deux satellites (10, 12) font partie d'une constellation de satellites dans laquelle plusieurs satellites évoluent sur une orbite commune, s'agissant en matière d'orbite en particulier d'une orbite MEO située à distance moyenne de la Terre, et les deux satellites étant voisins l'un de l'autre à l'intérieur de l'orbite.

7. Procédé selon la revendication 5, **caractérisé en ce que** les deux satellites (10, 12) font partie d'une constellation de satellites dans laquelle au moins un premier satellite se trouve sur une première orbite, par ex. une orbite MEO située à distance moyenne de la Terre, et au moins un deuxième satellite se trouve sur une deuxième orbite, différente de la première orbite, par ex. une orbite LEO située à faible distance de la Terre.

8. Procédé selon l'une des revendications 1 à 7, **caractérisé en ce que** le code de modulation présente une séquence PRN de symboles ou un gold code.
